# EUROPEAN PATENT APPLICATION

(11) **EP 4 011 732 A1**
(43) Date of publication of application: **15.06.2022**
(21) Application number: 20212895.5
(22) Date of filing: 09.12.2020
(51) Int. Cl.: B60W 30/09, B60W 30/095, B60W 30/14

(54) **METHOD FOR CONTROLLING A VEHICLE WHEN AN OBSTACLE IS DETECTED IN SURROUNDINGS OF THE VEHICLE; CONTROL DEVICE FOR A VEHICLE WITH AN AUTONOMOUS DRIVING FUNCTION; COMPUTER READABLE MEDIUM AND MOTOR VEHICLE**

(71) Applicant: Argo AI GmbH, 80805 München (DE)
(72) Inventor: Böddeker, Bert, 85748 Garching (DE)
(74) Representative: Hofstetter, Schurack & Partner

(57) **Abstract**

The invention is concerned with a method for controlling a vehicle (10) when an obstacle (18) is detected in surroundings (39) of the vehicle (10), wherein an autonomous driving function of the vehicle (10) plans a trajectory (15). An observer function (23) determines and/or adapts a size of a dynamic protection zone (26) that extends in a current driving direction (13), wherein the size depends on a current driving speed of the vehicle (10), wherein the observer function determines whether the obstacle (18) is detected within the dynamic protection zone (26), and in the case the obstacle (18) is detected, a limiter function (29) is signaled by the observer function, wherein the limiter function (29) is provided in the signal path (30) and the limiter function (29) reduces speed values of the planned trajectory (15) without influencing the line (25) of the movement of the vehicle (10), thereby causing the observer function (23) to shrink the dynamic protection zone (26) until the obstacle (18) lies outside the shrunken dynamic protection zone (26).

## Description

The invention is concerned with a method for controlling a vehicle when an obstacle, e.g. a crossing pedestrian, is detected in the surroundings of the vehicle. The invention is also concerned with a control device for performing the method and with a vehicle comprising such a control device.

In an automated driving system, ADS, of a vehicle, a safety mechanisms with safety integrity is required, specifically for protection of crossing pedestrians, i.e. pedestrians who walk into a direction that will cross a line of movement of the vehicle.

Such a line of movement of an ADS-controlled vehicle is part of a so called trajectory that is planned by an autonomous driving function for controlling a driving actuator of the vehicle. The trajectory sets the line of movement together with speed values that define the driving speed of the vehicle for each point along the line. The driving actuator is then instructed to steer the vehicle along the line of movement and set the driving speed of the vehicle to the corresponding speed value at each point along the line. The driving actuator will then steer and accelerate the vehicle according to the trajectory. The trajectory thus describes the future movements of the vehicle, as the trajectory is used to control the driving actuator that will then act according to the received trajectory data.

If an object is detected by the autonomous driving function, the trajectory will be adapted and signaled to the driving actuator such that the vehicle reacts to the newly detected object.

A corresponding object-detection is based on sensor data of a sensor set that the autonomous driving function is coupled to. Evaluating these sensor data of a whole sensor set is a task which requires a complex data processing which may require significant processing time. Accordingly, verifying the correct behavior of an autonomous driving function in regard to the reaction to spontaneously appearing obstacles, for example a pedestrian stepping out from behind a bus, cannot be done reliably for every possible case.

There is therefore a strong interest in providing an observer function that will enable an autonomously driving vehicle to react to spontaneously appearing objects by applying a simple, well understood logic that can be applied to many possible situations.

Document EP 2 916 307 A1 discloses a method of detecting a pedestrian in an area that is ahead in the direction of movement of a vehicle and that is moving adjacent to the road. It modifies the time of execution of a safety operation for ensuring the safety of the pedestrian in accordance with a road condition in the area. To execute a safety operation (e.g. to decelerate a vehicle in order to avoid hitting a pedestrian), time to recognize the pedestrian and time to operate a brake as well as the movement of the pedestrian are taken into account so that an unnecessary execution of the safety operation may be avoided. This required a complex adaptation of the autonomous driving function and makes its possible behaviour even more difficult to predict.

Document US 2018 / 0 273 030 A1 discloses identifying a pedestrian in the landscape in front of the vehicle by evaluating LIDAR data and comparing the LIDAR data with predefined pedestrian threshold criteria. If the pedestrian is detected, the vehicle may take an evasive action to avoid a collision with the pedestrian. The vehicle may be controlled by a control unit in the vehicle to accelerate, brake or stop to avoid the pedestrian. It further comprises a pedestrian protection subsystem to identify a pedestrian in real time based on detection of human breathing, which is detected by comparing sensor data from a radar with predefined radar signal parameters indicative of human breathing. This system will not work in a surroundings with strong wind.

Document DE 10 2018 124 161 A1 discloses a method for at least partially automated driving function of a motor vehicle on a roadway, comprising the steps: Receiving ambient signals that represent an environment of the motor vehicle detected by means of an environment sensor system of the motor vehicle, processing the environmental signals in order to detect a traffic situation in the environment in which a pedestrian could potentially step onto the road from the edge of the road, upon detection of the traffic situation, generation of control signals for at least partially automated control of a transverse and longitudinal guidance of the motor vehicle in order to provide an instantaneous reaction time window of the motor vehicle. However, as this needs a re-planning of the whole trajectory, valuable time can be lost while the new trajectory is calculated.

It is an object of the present invention to provide a protection for pedestrians by providing a logic that results in a predictable behavior of an autonomously driving vehicle in many different driving situations.

The object is accomplished by the subject matter of the independent claims. Advantageous developments with convenient and non-trivial further embodiments of the invention are specified in the following description, the dependent claims and the figures.

The invention provides a method for controlling a vehicle when an obstacle (e.g. a crossing pedestrian in front of the vehicle and/or behind the vehicle in case of a reverse situation) is detected in the surroundings of the vehicle (e.g. front and/or side and/or back area). The method may be performed while an autonomous driving function of the vehicle plans a trajectory comprising a line of movement and corresponding speed values along the line of movement and then sends the planned trajectory to a driving actuator over a signal path. The trajectory can be described by trajectory data. The "signal path" may comprise, for example, a software interface and/or a digital communication bus. In general, any part of the programming logic and/or electronic system architecture can be regarded as the signal path, if it is used for transferring the trajectory data from the autonomous driving function to the driving actuator. The signal path starts where the final trajectory data of autonomous driving function are available (output of the autonomous driving function) and before they have any influence on the driving actuator (input of the driving actuator), i.e. the signal path links the autonomous driving function and the driving actuator.

The inventive method does not require adapting the autonomous driving function itself in order to react to the obstacle. Nevertheless, the driving actuator will still receive valid trajectory data that can be used for controlling the movement of the vehicle. This is achieved by manipulating the trajectory data while they are transmitted over the signal path.

To this end, a limiter function is provided in the signal path. Such a limiter function can be realized on the basis of programming instructions for at least one microprocessor and/or microcontroller.

For operating or controlling the limiter function, an observer function is operated in a control device of the vehicle. The observer function observes a dynamic protection zone, i.e. a zone where no obstacle should be inside, while the vehicle follows the line of movement given by the trajectory. The observer function may receive the trajectory data from the autonomous driving function in order to determine the planned driving direction and/or line of movement. The protection zone is dynamic in that the observer function determines and/or adapts a shape and/or size of that dynamic protection zone. In general, the protection zone extends in a current driving direction from the vehicle, wherein the shape and/or size depends on a current driving speed of the vehicle. The dynamic protection zone is dynamically expanded, if the driving speed of the vehicle is increased, and the dynamic protection zone is shrunk, if the driving speed of the vehicle is reduced. The respective shape and/or size of the protection zone may be set as a function of a speed-dependent braking distance. The protection zone may thus cover or define a zone that needs to be free of any potentially endangered obstacle when the vehicle approaches or drives into that zone. The protection zone is adapted with a "balloon effect" or "pumping effect" in that the zone is inflated when the speed of the vehicle is increased and it is deflated if the speed is reduced. Thus, the higher the speed, the more free space is required and also secured.

The observer function also determines whether any obstacle is detected within the dynamic protection zone (e.g. a predefined detection area), and in the case an obstacle is detected within the dynamic protection zone, the limiter function is signaled or triggered or activated by the observer function in order to assist the autonomous driving function in considering the obstacle.

If triggered by the observer function, the limiter function reduces the speed values of the planned trajectory without influencing the line of the movement of the vehicle. This results in limited speed values or manipulated trajectory data. The driving actuator will slow down the vehicle accordingly, if the current speed values of the original trajectory and/or the driving speed are above the limit. This, in turn, causes the observer function to shrink the dynamic protection zone. This may be continued as a closed loop, i.e. the reduction of the speed values of trajectory by the limiter function leads to the deceleration of the vehicle by driving actuator, which leads to the shrinking of protection zone by the observer function, until the obstacle lies outside the shrunken dynamic protection zone. Overall, in the trajectory data, the limiter function reduces the speed values only, while the line of movement does not need to be adapted.

The method provides the advantage that independently of the complexity of the autonomous driving function, a simple and reliable control logic is superimposed that will react to an obstacle whose behavior has not yet been considered in the trajectory as calculated by the autonomous driving function.

The invention also comprises embodiments that provide features which afford additional technical advantages.

A further benefit is obtained, if the observer function detects the obstacle based on sensor data that indicate the presence of an object and this object is then classified as an obstacle, if the physical size of the object is at least a predefined minimum size. In other words, the observer function will not react to any (small) object, but only an object that has a size larger than or equal to the defined minimum size. This prevents an unnecessary reduction of the driving speed. The predefined minimum size can be in the range of 30 cm to 80 cm of height, i.e. in the size of a young child that is able to walk by itself and may therefore run onto a road.

A further benefit is obtained, if the observer function detects the obstacle independently of a type or class of the object. In other words, no recognition results of a classifier function, for example an artificial neural network, is needed. The reaction time or latency of the observer function for providing the signal to the limiter function can therefore be reduced.

If, however, a classifier function, like an artificial neural network, is available, a further benefit is obtained, if the observer function classifies an object as an obstacle if a classifier function of the control device and/or the autonomous driving function signals that an certainty value regarding a classification result for the object is within a predefined interval, e.g. below a given certainty threshold. Such a certainty value is available from a classifier function. It can be, for example, a percentage value, where 0% may indicate "completely unsure" and 100% may indicate "completely sure". If the certainty value is larger than the certainty threshold and at the same time the classification results indicates that the object is of a specific object type, e.g. a pedestrian, the limiter function will of course also be signaled.

A further benefit is obtained, if the observer function detects the obstacle based on a sensor set comprising one or more sensors, wherein the sensor set of the observer function comprises at least one sensor that is also comprised in a sensor set of the autonomous driving function. This reduces the number of sensors needed to provide sensor data for both the autonomous driving function and the observer function. A further benefit is obtained, if the sensor set of the observer function comprises at least one sensor that is different from each sensor in the sensor set of the autonomous driving function. If an obstacle is undetectable on the basis of the sensor data of the sensor set of the autonomous driving function, the obstacle may be detected by the observer function on the basis of the sensor data of this at least one additional or different sensor.

A further benefit is obtained, if the protection zone is wider than a width of the vehicle such that the protection zone also encompasses or covers an obstacle that the vehicle would pass by (i.e. not touch) on the basis of the planned trajectory. In other words, the protection zone does not only cover the strip of ground, that will be covered by the vehicle when it follows the line of movement of the trajectory, but a region to the left and to the right of that strip of ground will also be part of the protection zone. This allows to consider a movement of the obstacle towards the line of movement that may occur, while the vehicle is approaching the obstacle.

A further benefit is obtained, if the width of the protection zone (measured perpendicular to the line of movement) is set on the basis of a predefined statistic distribution function of pedestrian speeds and/or at least one predefined walking speed value that describes a walking speed of a potential pedestrian who is moving perpendicular to the line of movement of the trajectory. The predefined statistic distribution function of pedestrian speeds and/or the at least one walking speed value provides a beneficial parameter for setting or controlling the effect of the protection zone. In a surrounding, where fast moving pedestrians may be expected (e.g. close to a bus station or a school), the width of the protection zone can be set to a higher width value than in a surrounding, where the moving speed of the pedestrian may be a slower walking speed (e.g. close to a park). The at least one walking speed value may each be mapped to a respective basic width value of the protection zone. This basic width value can then be adapted or scaled according to the current speed of the vehicle by the observer function like has been described above. Exemplary values for walking speeds are in the range between 0 km/h and 10 km/h.

A further benefit is obtained, if at least two predefined walking speed values are set, wherein each walking speed value is valid for a different distance intervals with regard to the vehicle. For the closest distance interval, the fastest walking speed value may be applied and the further a distance interval is away, the lower the distance value may be chosen. A first distance interval may reach von 0 m to a first distance value in the range of 3 m to 8 m, a second distance interval may reach from the first distance value to a second distance value in the range of 8 m to 15 m, a third distance interval value be defined from the second distance value to a third distance value in the range of 12 m to 40 m.

A further benefit is obtained, if the change in the trajectory data (as performed by the limiter function) describes a reduction of the speed of the vehicle down to a speed value that is still larger than 0 such that the vehicle continues driving along the line of movement. This allows the vehicle to continue its travel.

A further benefit is obtained, if the speed values are reduced until the protection zone is shrunk to a size such that the obstacle is positioned at a border of the protection zone. This minimizes the influence of the limiter function on the original trajectory that is intended or calculated by the autonomous driving function.

However, the vehicle is preferably stopped by the limiter function (by setting at least one of the speed values to zero), if a protection zone with a size of zero is required due to the position of the obstacle. This will prevent that an obstacle is run over, if it blocks the path of the vehicle.

A further benefit is obtained, if the shape of the protection zone is adapted to fulfill the acceptance criteria of pedestrian injury rates of a given severity level, in particular when the assumed injury rates influencing the shape of the protection zone consider the local and temporal expected rate of crossing pedestrians. This provides the possibility to systematically adapt the shape of the protections zone in order to design it, e.g., more conservative in crowded areas and less conservative on city highways. Especially, the injury rate can be set to a low value and a corresponding shape of the protection zone will be set. Suitable shapes can be derived on the basis of, e.g., simulations or test drives using dummies.

The invention also comprises a control device for a vehicle with an autonomous driving function. Such a control device can be designed as an electronic control unit (ECU) or as a network of several electronic control units. The control device comprises a processing unit that is adapted to perform a method according to the invention. To achieve this, the processing unit may comprise at least one microprocessor. A data storage may be coupled to the at least one microprocessor and the data storage may comprise programming instructions that cause the at least one processor to perform the method when the at least one processor executes the programming instructions.

The invention also provides a computer readable data storage medium containing a programming code that comprises programming instructions for performing a method according to the invention when executed by said processing unit of a control device. This computer readable data storage medium can be used to turn a generic control device into an embodiment of the inventive control unit.

The invention is also directed to a motor vehicle comprising a sensor set and an autonomous driving function coupled to the sensor set and a driving actuator coupled to the autonomous driving function over a signal path. The signal path comprises a limiter function that is coupled to an observer function according to the invention. The motor vehicle can be designed as a passenger vehicle or as a truck.

The invention also comprises the combinations of the features of the different embodiments.

In the following an exemplary implementation of the invention is described. The figures show:
- Fig. 1: a schematic illustration of an embodiment of the inventive motor vehicle;
- Fig. 2: a schematic illustration of a protection zone; and
- Fig. 3: a sketch showing the vehicle of Fig. 1 while it is adapting the protection zone.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

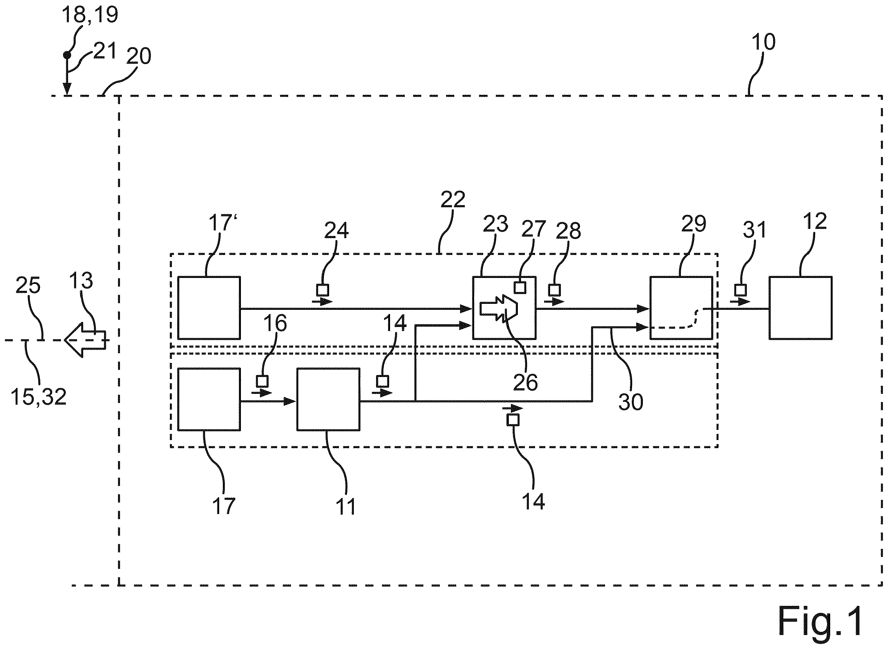

Fig. 1 shows a vehicle 10 that can be a passenger vehicle or a truck. The vehicle 10 may comprise an autonomous driving function 11 for controlling a driving actuator 12 such that vehicle 10 may drive along a driving direction 13 without the help of a driver. The autonomous driving function 11 may control the driving actuator 12 by means of trajectory data 14 for setting or defining a trajectory 15 along which the driving actuator 12 shall steer the vehicle 10 and set the speed value of the driving speed of the vehicle 10.

For calculating the trajectory data 14, the autonomous driving function 11 may receive sensor data 16 from a sensor set 17. The sensor set 17 may comprise, for example, at least one camera and/or at least one radar and/or at least one lidar sensor. The sensor data 16 may describe the environment or surroundings of the vehicle 10. The autonomous driving function 11 may be implemented as a software or programming instructions for at least one microprocessor of a processing unit. The autonomous driving function 11 may receive the sensor data 16 and calculate an appropriate trajectory 15 that may lead the vehicle 10 around any obstacle described by the sensor data 16.

For this, a certain amount of calculation time is needed. Thus, if a new obstacle appears in the driving direction 13 of the vehicle 10, there may not be enough time to re-calculate the trajectory 15 for considering the new obstacle 18. If the obstacle 18 is a pedestrian 19 who walks towards a strip 20 that defines the space needed by the vehicle 10 for moving along the trajectory 15, and if the walking speed 21 is large enough to reach the strip 20 before the vehicle 10 has passed by, this could lead to a collision of the vehicle 10 with the obstacle 18.

In vehicle 10 a checker functionality 22 is provided to support the autonomous driving function 11 in reacting to a newly appearing obstacle 18 that has not been considered in the trajectory data 14 or that has been considered in the trajectory data 14 assuming a different behavior than is actually observed.

An observer function 23 may receive sensor data 24 from a sensor set 17' that may comprise the same and/or different sensors as compared to sensor set 17 for the autonomous driving function 11. On the basis of the sensor data 24 and the trajectory data 14 the observer function 23 may determine which line 25 of movement will result from the current trajectory data 14 and at which speed the vehicle 10 should move along that line 25.

The observer function 23 may define a shape of a projection zone 26 that may consider obstacles 18, like pedestrians 19, who move with a given or defined maximum speed value 27 of their walking speed 21 towards the line 25 such that they may reach the strip 20 before the vehicle 10 arrives or has passed by the obstacle 18. If an obstacle 18 is detected inside the protection zone 26, the observer function 23 may generate a limitation signal 28 for a limiter function 29. The limiter function 29 may be provided within a signal path 30 that transmits the trajectory data 14 from the autonomous driving function 11 towards the driving actuator 12. If the limiter function 29 receives the limitation signal 28, the limiter function 29 manipulates the trajectory data 14 in order to generate adapted trajectory data 31 that describe an adapted trajectory 32. The adapted trajectory data 31 set the adapted trajectory 32 such that it describes the same line of movement 25 but the speed values are limited to a maximum allowable value and/or they are reduced as compared to the speed values contained in the original trajectory data.

The observer function 23 defines a size and/or shape of the projection zone 26 as a function of the actual moving speed or driving speed of the vehicle 10. The protection zone 26 may thus be adapted in size and/or shape as a function of the driving speed of the vehicle 10 along the line of movement 25. The larger the speed, the larger the protection zone 26, which considers the longer distance needed for breaking or halting the vehicle 10 and the longer time to come to a stop and thus the more time for pedestrians to reach the line 25, thus a larger lateral extension is advantageous.

When the driving speed is reduced (as the driving actuator 12 reacts to the adapted trajectory data 31), this may change the observation that the obstacle 18 is within the protection zone 26. The protection zone 26 may have shrunk to a size small enough to leave the obstacle 18 outside or at least at a border of the protection zone. Then, no further reduction of the speed values of the trajectory data 14 is necessary and the vehicle 10 may drive past the obstacle 18 safely at that driving speed.

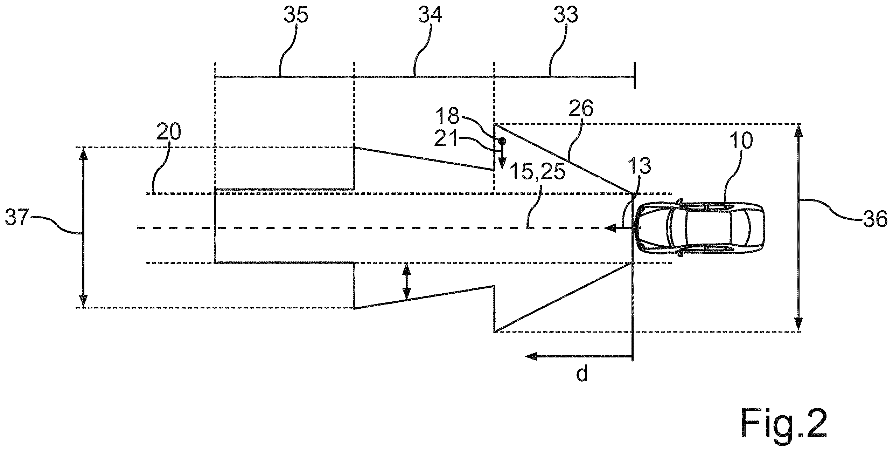

Fig. 2 illustrates a possible definition of the protection zone 26. The protection zone 26 may extend from the vehicle 10 along the driving direction 13. What is shown is an axis for the distance value d starting from the vehicle 10 and measured along the line 25 of movement. If the line 25 of movement is bent for driving a curve (not shown), the shape of the protection zone 26 can be adapted accordingly, i.e. it may be bent.

The protection zone 26 may comprise of three different distance intervals 33, 34, 35 of different widths, but this number of intervals is only exemplary and it may also be less or more than three. The width is measured perpendicular to the line of movement 25. The distance intervals 33 closest to the vehicle 10 may provide the broadest part of the protection zone 26 in that it considers obstacles 18 that have the largest or fastest walking speed 21 towards the line 25 of movement of the trajectory 15. This results in the broadest width 37. The next distance interval 34 may consider obstacles with a smaller walking speed resulting in a smaller width 37. The 3rd distance interval 35 may only consider obstacles that are already within the strip 20. However, this is only an example shape. There does not have to be a broadest part closest to the vehicle. As an exemplary alternative, a rectangle shape could also be provided, but the choice is not limited to the shapes shown.

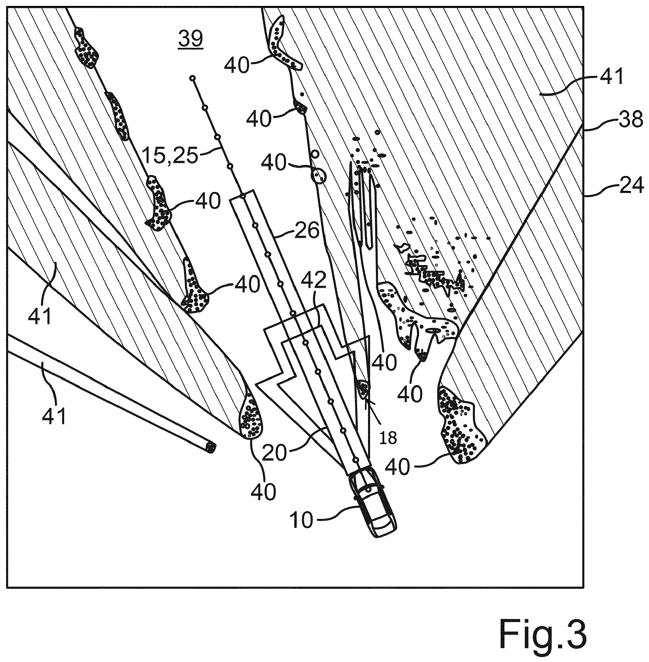

Fig. 3 illustrates measurement data or sensor data 24 as a map 38 of surroundings 39 of the vehicle 10. As can be seen, the sensor data 24 describes several objects 40 that, however, are not classified as obstacles as they are away far enough, i.e. outside the protection zone 26. Behind the objects 40 a respective shadow area or shadow zone 41 results from the fact that the sensor set 17' with its sensors cannot detect any further objects behind the detected objects 40.

If an object is within the protection zone 26, such an object can become an obstacle 18, if from the sensor data 16, 24 it is clear that the object shall not be hit by the vehicle 10, as it is, e.g., a pedestrian or at least it is recognized as an object larger than a predefined minimum size. An object may also be classified as an obstacle 18, if it cannot be guaranteed or certified that this object is not or cannot hide, for example, a pedestrian. If a predefined uncertainty remains from the sensor data 24, the presence of an obstacle 18 is preferably assumed. This can be the case, if the size of the object is larger than a predefined minimum size and/or if an object recognizer, for example an artificial neural network, indicates that a classification of the object can only be provided with a certainty value that is smaller than a predefined minimum certainty value.

If an obstacle 18 is detected inside the protection zone 26, the observer function 23 will generate the limitation signal 28. Limitation signal 28 can be a binary signal only indicating that the current trajectory data 14 are not okay NOK. The limitation signal 28 can additionally or alternatively comprise a new speed value that shall be set or enforced by the limitation function 29. The new speed value can indicate at which speed the protection zone 26 will be small enough such that the obstacle 18 will not be inside the then resulting shrunken protection zone 42.

The limitation function 29 may take back the limitation, i.e. it may increase the upper limit such that trajectory data 14 with higher speed values are again passed through un-changed, when the vehicle 10 has passed by the obstacle 18.

Generating the limitation signal 28 for reducing the speed values in the trajectory data 14 by the limiter function 29 and ending the limitation signal 28 may be a dynamic process such that the projections zone 26 may be continuously "pumping", i.e. alternating its shape and/or size (shrinking, growing, shrinking, growing et cetera), as the limiter function 29 and the observer function 23 interact. Whenever an obstacle 18 is inside the protection zone 26, observer function 23 may generate the limitation signal 28 such that the limitation function 29 is activated and reduces the speed values in the trajectory data 14. The upper limit that may be applied by the limiter function 29 may be gradually lowered such that the vehicle 10 decelerates gradually. This deceleration will result in a shrinking protection zone 42. Once no obstacle 18 is detected inside the shrunken protection zone 42 anymore, the observer function 23 will stop sending the limitation signal 28 such that the limiter function 29 will increase the upper limit again. This can be implemented as a gradual increase. The vehicle 10 will be accelerated accordingly until either a new obstacle 18 of the same obstacle 18 is detected inside the resulting protection zone 26 again or until the original speed value from the un-changed trajectory data 14 is reached again.

The idea described is to detect a pedestrian in a speed-dependant dynamic protection zone or a virtual area in front of the vehicle on the basis of data analysis of the sensor data (e.g. checking if the detected object can be a pedestrian based on its dimensions). The size of the protection zone is adapted to expand with regard to an increase in the speed of the motor vehicle. If the detected object cannot be guaranteed not to be a pedestrian based on the data analysis, the safety mechanism may reduce the vehicle speed or even stop the vehicle in extreme conditions. In such a case, the autonomous driving function of the vehicle may then plan another trajectory of the vehicle, along which the safety mechanism may allow a speed greater than zero. But the described logic does not depend on such a re-planning, as it simply limits the maximum speed that an autopilot may execute.

The checker functionality 22 for obstacles like crossing pedestrians (CCP - checker for crossing pedestrians) is a safety mechanism to prevent insufficient deceleration of vehicle in automated driving mode in front of crossing pedestrians. Statistic information about the speed distribution of crossing pedestrians and accident statistics of the probability of accident severities at various impact speeds between vehicles and pedestrians can be used to parametrize a dynamic protection zone in front of the vehicle with minimal dimensions.

The CCP may give protection for pedestrians that walk along the street or cross with reasonable speed resulting in low probabilities for any injury. Pedestrians cross streets with higher speed only with low probability. If they still do so, the CCP will protect against collisions with higher impact speed and consequently more severe injuries. Pedestrians that move with normal walking speed should have a very low probability of injuries implemented by low collision speed. In total, the acceptance criteria in terms of limits for the rates of pedestrian injuries at different levels of severity have to be kept.

The CCP requires only minimal classification certainty. Any detected object within the protection zone that could be a pedestrian or that could hide a pedestrian leads to a deceleration of the vehicle or even an emergency brake.

An Automated Driving System without a checker generally complies a sensor set, processing for calculating a trajectory, actuation to follow the trajectory. A checker adds an own sensor set, a safety observer and a limiter into this architecture. (Variants without own sensors using preprocessed data of the perception part of the mission channel are also possible). The observer of the checker contains a metric to decide, based on the sensor input, if a trajectory is safe or not. As long as no safety violation is detected, the limiter lets the trajectory pass through unchanged. If the observer notifies a safety violation to the limiter the limiter modifies the trajectory to stay within a safety envelope.

The CCP can use an emergency brake limiter that always forwards the path of a given trajectory but reduces the speed with maximum brake force considering the dynamic limits and the limitation of the surface friction. The CCP could also pick between several offered trajectories with different levels of violation of the protection zone.

A functionally redundant set of sensors can be used with maximum overlap between the sensors in the short range region with low opening angle directly in front of the vehicle to reach a maximum safety integrity level with respect to detection of objects that can be or can hide a pedestrian.

The checker for crossing pedestrians (CCP) allows a quantitative statement about the safety of the system with respect to crossing pedestrians. Upper limits for the rates of injuries with given severity can be calculated. Or alternatively, the lateral extension of the safety zone can be minimized for given acceptance criteria regrading acceptable injury rates and severities. The protection zone or safety zone is dynamically calculated at runtime as a function of the planned trajectory. The CCP has low complexity as it does not require pedestrian classification, advanced prediction, or own path planning and thus can be easily implemented with high safety integrity. An ASIL (Automotive Safety Integrity Level) decomposition between the mission channel that generates the original trajectory and the CCP allows to implement the mission channel with lower safety integrity.

The longitudinal extension of the protection zones may be given in terms of collision speed (after maximum brake action) and the absolute dimension may be speed dependent. Accordingly, the lateral extension of the protection zone may be given by the ratio of assumed pedestrian speed to vehicle speed.

Overall, the example shows how a checker for crossing pedestrians may be superimposed on an autonomous driving function.

## Claims

1. Method for controlling a vehicle (10) when an obstacle (18) is detected in surroundings (39) of the vehicle (10), wherein an autonomous driving function of the vehicle (10) plans a trajectory (15) comprising a line (25) of movement and corresponding speed values along the line (25) of movement and sends the planned trajectory (15) to a driving actuator (12) over a signal path (30),
**characterized in that**
an observer function (23) of a control device of the vehicle (10) determines and/or adapts a shape and/or size of a dynamic protection zone (26) that extends in a current driving direction (13) from the vehicle (10), wherein the shape and/or size depends on a current driving speed of the vehicle (10), **in that** the dynamic protection zone (26) is dynamically expanded if the driving speed of the vehicle (10) is increased and the dynamic protection zone (26) is shrunk if the driving speed of the vehicle (10) is reduced, wherein the observer function determines whether the obstacle (18) is detected within the dynamic protection zone (26), and
in the case the obstacle (18) is detected within the dynamic protection zone (26), a limiter function (29) is signaled by the observer function, wherein the limiter function (29) is provided in the signal path (30) and, if signaled by the observer function (23), the limiter function (29) reduces the speed values of the planned trajectory (15) without influencing the line (25) of the movement of the vehicle (10) resulting in a limited trajectory (15), thereby causing the observer function (23) to shrink the dynamic protection zone (26) until the obstacle (18) lies outside the shrunken dynamic protection zone (26).

2. Method according to claim 1, wherein the observer function detects the obstacle (18) based on sensor data (24) that indicate the presence of an object (40) and the object (40) is classified as an obstacle (18), if the physical size of the object (40) is at least a predefined minimum size.

3. Method according to claim 2, the observer function detects the obstacle (18) independent of a type of the object (40).

4. Method according to any of the preceding claims, wherein the observer function (23) classifies an object (40) as an obstacle (18) if a classifier function of the control device and/or the autonomous driving function signals that a certainty value regarding a classification result for the object (40) is within a predefined interval.

5. Method according to any of the preceding claims, wherein the observer function (23) detects the obstacle (18) based on at least a sensor set (17') comprising one or more sensors, and wherein a) the sensor set (17') of the observer function (23) comprises at least one sensor that is also comprised in a sensor set (17) of the autonomous driving function and/or b) the sensor set (17') of the observer function (23) comprises at least one sensor that is different from each sensor in the sensor set (17) of the autonomous driving function.

6. Method according to any of the preceding claims, wherein the protection zone (26) is wider than a width (37) of the vehicle (10) such that the protection zone (26) also encompasses an obstacle (18) that the vehicle (10) would pass by on the basis of the planned trajectory (15).

7. Method according to claim 6, wherein the width (37) of the protection zone (26) is set on the basis of a predefined statistic distribution function of pedestrian speeds and/or at least one predefined walking speed (21) value that describes a walking speed (21) of a potential pedestrian (19) who is moving perpendicular to the line (25) of movement of the trajectory (15).

8. Method according to claim 7, wherein at least two predefined walking speed (21) values are set, wherein each walking speed (21) value is valid for different distance intervals (33, 34, 35) with regard to the vehicle (10).

9. Method according to any of the preceding claims, wherein the change in the trajectory (15) describes a reduction of the speed of the vehicle (10) to a speed value larger than 0 such the vehicle (10) continues driving along the line (25) of movement.

10. Method according to any of the preceding claims, wherein the speed values are reduced until the protection zone (26) is shrunk to a size such that the obstacle (18) is positioned at a border of the protection zone (26).

11. Method according to any of the preceding claims, wherein the vehicle (10) is stopped by the limiter function (29), if a protection zone (26) with a size of zero is required due to the position of the obstacle (18).

12. Method according to any of the preceding claims, wherein the shape of the protection zone (26) is adapted to fulfill acceptance criteria of pedestrian injury rates of a given severity level, and in particular wherein the assumed injury rates influencing the shape of the protection zone (26) consider the local and temporal expected rate of crossing pedestrians.

13. Control device for a vehicle (10) with an autonomous driving function, the control device comprising a processing unit, wherein the processing unit is adapted to perform a method according to any of the preceding claims.

14. Computer readable data storage medium containing a programming code that comprises programming instructions for performing a method according to any of the claims 1 to 12 when executed by a processing unit of a control device according to claim 13.

15. Motor vehicle (10) comprising a sensor set (17) and an autonomous driving function coupled to the sensor set (17) and a driving actuator (12) coupled to the autonomous driving function over a signal path (30), **characterized in that**
a control device according to claim 13 provides a limiter function (29) in the signal path (30) and the limiter function (29) is coupled to an observer function (23).
